# EUROPEAN PATENT SPECIFICATION

(11) **EP 2 484 983 B1**
(45) Date of publication and mention of the grant of the patent: **27.09.2017**
(21) Application number: 10820787.9
(22) Date of filing: 08.09.2010
(51) Int. Cl.: F24D 10/00, F24D 19/10, F24D 12/02

(54) **OPERATION METHOD FOR MICRO-COGENERATION SYSTEM**
BETRIEBSVERFAHREN FÜR EIN MIKRO-HEIZKRAFTSYSTEM
PROCÉDÉ DE FONCTIONNEMENT POUR UN SYSTÈME DE MICRO-COGÉNÉRATION

(30) Priority: 01.10.2009 KR 20090093860
(43) Date of publication of application: 08.08.2012
(73) Proprietor: Kyungdong Navien Co., Ltd., Pyungtaek-si Gyunggi-do 450-818 (KR)
(72) Inventor: MIN, Tae-sik, Seoul 156-070 (KR)
(74) Representative: Habermann, Hruschka & Schnabel
(86) International application number: PCT/KR2010/006090
(87) International publication number: WO 2011/040714

(56) References cited:
- WO-A1-2007/046361
- DE-A1- 19 740 398
- DE-A1-102005 042 495
- JP-A- 2004 344 154
- JP-A- 2009 204 203
- KR-A- 20030 030 553
- KR-A- 20030 042 924
- KR-A- 20060 084 542
- KR-B1- 100 740 542

## Description

### Technical Field

The present invention relates to an operation method for a micro-cogeneration system, and more particularly, to an operation method for a micro-cogeneration system capable of using waste heat generated from a co-generator in both of heating and hot-water supply.

### Background Art

A micro-cogeneration system, also referred to as a "combined heat and power (CHP) system, is a general energy system in which chemical energy of fuel is converted into electric energy by various motors such as an internal combustion engine, a gas turbine, a fuel cell, a Stirling engine, and so on, and waste heat accompanied at this time is effectively utilized.

Since such a generation method is an example of high efficiency energy technology capable of improving energy use efficiency two times or more in comparison with a conventional generation method and simultaneously an environment-friendly technique capable of remarkably reducing a discharge amount of CO, which has the highest level of contribution to global warming, all countries of the world are actively introducing such generation methods.

One example of such a micro-cogeneration system is disclosed in Korean Patent Registration No. 713620.

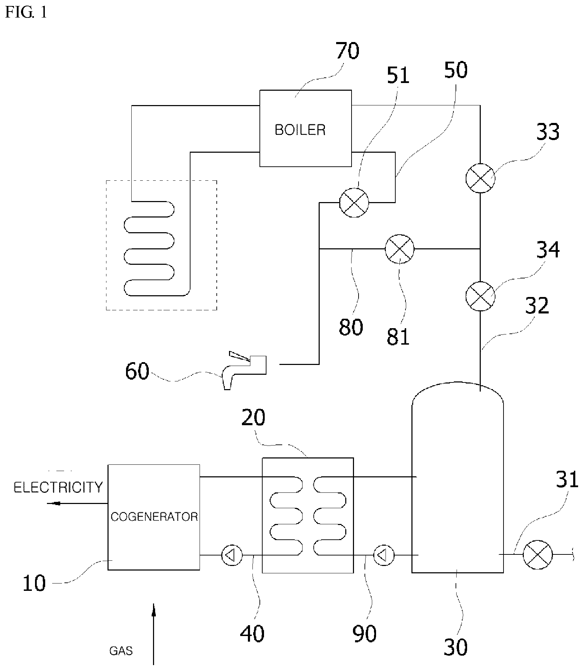

FIG. 1 is a schematic view showing a conventional cogeneration and individual heating integrated system, which is disclosed in Korean Patent Registration No. 713620.

The conventional cogeneration and individual heating integrated system includes a co-generator 10 configured to receive a gas and generate electricity, a waste heat recovery pipe 40 through which cooling water flows and configured to recover waste heat from the co-generator 10, a closed hot-water supply tank 30 configured to receive hot water through a water supply port 31 connected to one side of a lower portion, a hot-water supply heating pipe 90 connected to a lower side of the hot-water supply tank 30 to circulate water filled in the hot-water supply tank 30 and receive heat from the waste heat recovery pipe 40 through a heat exchanger 20 to accumulate the heat in the hot-water supply tank 30, a hot-water supply pipe 32 connected to an upper end of the hot-water supply tank 30 to discharge the supplied hot water using a pressure when the hot water is supplied into the hot-water supply tank 30 through the water supply port 31, an individual boiler 70 configured to heat the hot water supplied through the hot-water supply pipe 32 and discharge the hot water to a tap water valve 60 through a hot-water pipe 50, a branch pipe 80 connected between the hot-water supply pipe 32 and the hot-water pipe 50, a switch valve 33 disposed between the branch pipe of the hot-water supply pipe 32 and the individual boiler to switch supply of the hot water, a switch valve 51 disposed on the hot-water pipe 50, and a switch valve 81 arbitrarily disposed on the branch pipe 80.

The conventional cogeneration system as described above has a problem in that the waste heat recovered from the co-generator 10 can be used only during a hot water operation in which hot water is supplied, i.e., upon hot-water supply, and cannot be used during a heating operation.

In addition, since cooling water circulating in the waste heat recovery pipe 40 is required to recover the waste heat from the co-generator 10, and the heat exchanger 20 configured to absorb heat from the cooling water and the hot-water supply heating pipe 90 and a circulation pump configured to circulate water in the hot-water supply tank 30 should be further installed, the entire structure is complicated and costs of installing and operating the system are increased.

Further, since the co-generator 10 and the individual boiler 70 are systematically separated from each other, when the waste heat is used for the hot water or heating, calories cannot be precisely controlled.

From document WO 2007/046361 A1 a cogeneration system is known which employs a Stirling engine, whereas a first burner is used to heat a heater section of the Stirling engine, a first heat exchanger is used for exchanging heat between the first burner and a heating medium, a second heat exchanger is used for exchanging heat between the heating medium and water, the water to be used to heat a hot water utilizing position, and a controller is used to control the first burner depending on demand for heat at the hot water utilizing position.

### Disclosure

### Technical Problem

In order to solve the foregoing and/or other problems, it is an aspect of the present invention to provide an operation method for a micro-cogeneration system, in which a co-generator is connected to a heat transfer medium channel of a boiler to use heat recovered from the co-generator for both of heating and hot water, so that a cost consumed to operate the cogeneration system can be reduced and calories supplied during a heating and hot water mode can be easily controlled.

### Technical Solution

The foregoing and/or other aspects of the present invention may be achieved by providing an operation method for a micro-cogeneration system according to claim 1.

### Advantageous Effects

According to the present invention, as a co-generator is integrally connected to a heat transfer medium channel of a boiler, a system configuration can be simplified and waste heat recovered from the co-generator can be used in both of heating and hot water, reducing a cost consumed to operate the system.

In addition, as a heat transfer medium is circulated in a state in which the co-generator is integrally connected to the heat transfer medium channel of the boiler, calories supplied for heating or hot water can be precisely controlled.

Further, when there is no hot water and heating load, heat energy can be accumulated by operating only the co-generator, and since the accumulated heat energy can be used in both of heating and hot water, energy efficiency can be increased.

### Description of Drawings

The above and other aspects and advantages of the present invention will become apparent and more readily appreciated from the following description of exemplary embodiments, taken in conjunction with the accompanying drawings of which:
FIG. 1 is a schematic view showing a conventional cogeneration and individual heating integrated system;
FIG. 2 is schematic view of a micro-cogeneration system in accordance with an exemplary embodiment of the present invention;
FIG. 3 is a view showing a path through which a heat transfer medium is circulated when there is no heating and hot water load in the cogeneration system of the present invention;
FIG. 4 is a view showing a path through which the heat transfer medium is circulated in the cogeneration system of the present invention in a heating mode; and
FIG. 5 is a view showing a path through which the heat transfer medium is circulated in the cogeneration system of the present invention in a hot water mode.

### <Description of Major Reference Numerals>

100: Co-generator
110: Heat exchange part
200: Boiler
210: Main heat exchanger
220: Three-way valve
230: Hot-water supply heat exchanger
240: Circulation pump
300: Heat transfer medium reservoir tank

### Mode for Invention

Reference will now be made in detail to the embodiments of the present invention, examples of which are illustrated in the accompanying drawings.

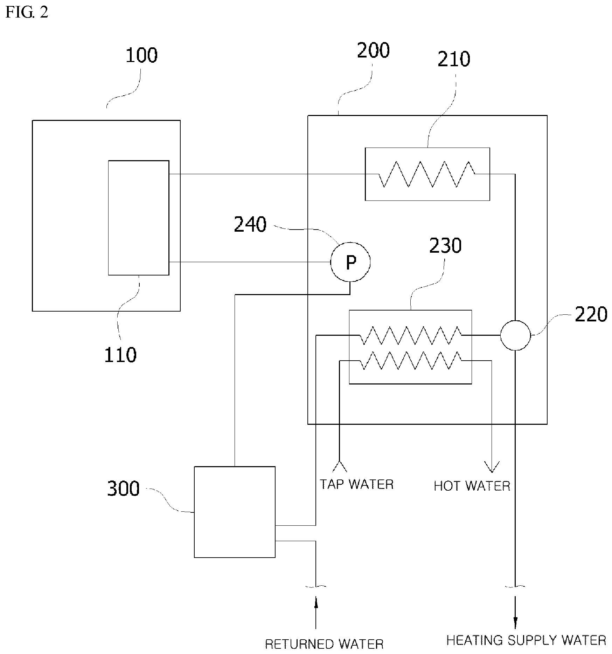

FIG. 2 is schematic view of a micro-cogeneration system in accordance with an exemplary embodiment of the present invention.

The cogeneration system in accordance with the present invention includes a co-generator 100 configured to recover waste heat using a heat transfer medium generated when electricity is generated, a boiler 200 configured to selectively circulate the heat transfer medium supplied from the co-generator 100 to any one of a place to be heated and a hot-water supply heat exchanger 230, and a heat transfer medium reservoir tank 300 configured to store the circulated heat transfer medium.

Here, the heat transfer medium refers to water, which is heating water.

The co-generator 100 is an apparatus driven by, for example, a turbine (not shown) to generate electricity and simultaneously recover waste heat generated by the turbine. A heat exchanger 110 is installed at the co-generator 100 to recover the waste heat. The heat exchanger 110 is configured such that a heat transfer medium flows to recover the waste heat, and the heat transfer medium circulates the boiler 200.

The boiler 200 includes a burner (not shown) configured to generate combustion heat, a main heat exchanger 210 configured to heat-exchange the combustion heat generated from the burner with the heat transfer medium supplied from the heat exchanger 110, a three-way valve 220 configured to selectively circulate the heat transfer medium supplied from the main heat exchanger 210 to any one of a place to be heated and the hot-water supply heat exchanger 230, a hot-water supply heat exchanger 230 configured to heat-exchange the heat transfer medium passing through the three-way valve 220 with tap water in a hot water mode, and a circulation pump 240 having an outlet side connected to the heat exchanger 110 of the co-generator 100 to circulate the heat transfer medium.

The tap water is introduced into the hot-water supply heat exchanger 230, and the tap water is heat-exchanged with the heat transfer medium passing through the three-way valve 220 to become hot water and then is supplied to a place at which the hot water is required.

The heat transfer medium reservoir tank 300 is constituted by a sealed vessel to store the heat transfer medium and accumulate heat. The heat transfer medium having a temperature lowered after circulation of the place to be heated in the heating mode, i.e., returned water, is introduced into the heat transfer medium reservoir tank 300, and the heat transfer medium having a temperature lowered while passing through the hot-water supply heat exchanger 230 in the hot water mode is introduced into the heat transfer medium reservoir tank 300.

The heat transfer medium introduced as described above is supplied into the heat exchanger 110 by driving the circulation pump 240, and for this, a pipe line through which the heat transfer medium flows is connected between the heat transfer medium reservoir tank 300 and the circulation pump 240.

According to the above structure, since the heat exchanger 110 of the co-generator 100 and a heating water circulation circuit of the boiler 200 configure one connected channel, the system can be very simply configured.

In addition, the heat transfer medium that absorbed the waste heat while passing though the heat exchanger 110 of the co-generator 100 may be supplied to the place to be heated and the hot-water supply heat exchanger 230 to use the waste heat for both of heating and hot water.

Further, since the heat transfer medium channels (a heating channel and a hot water channel) of the co-generator and the boiler can be connected to each other while only the co-generator can be operated to accumulate heat energy when there is no hot water and heating load so that the accumulated heat energy can be used for both of heating and hot water, energy efficiency can be improved.

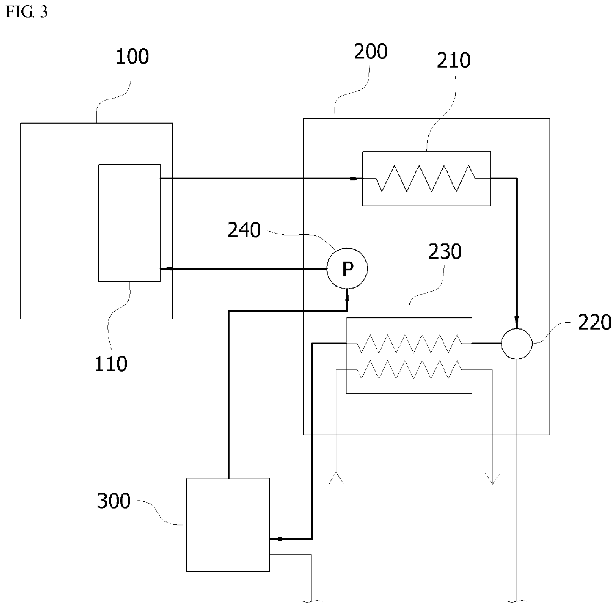

Hereinafter, an operation method of the present invention will be described with reference to FIGS. 3 to 5.

FIG. 3 is a view showing a path through which the heat transfer medium circulates when there is no heating and hot water load in a cogeneration system of the present invention.

When there is no heating and hot water load, an operation of the boiler 200 is stopped, and only the co-generator 100 is operated.

Of course, the circulation pump 240 in the boiler 200 is operated to circulate the heat transfer medium.

When the circulation pump 240 is operated, the heat transfer medium stored in the heat transfer medium reservoir tank 300 is introduced into the heat exchanger 110 of the co-generator 100 via the circulation pump 240.

In this case, the co-generator 100 is operated to generate electricity and simultaneously waste heat, and heat energy is transmitted to the heat transfer medium passing through the heat exchanger 110 by the waste heat.

The heat transfer medium passing through the heat exchanger 110 is supplied into the three-way valve 220 via the main heat exchanger 210.

Since the three-way valve 220 is opened toward the hot-water supply heat exchanger 230, the heat transfer medium is supplied to the hot-water supply heat exchanger 230. In this case, since there is no hot water load, there is no heat exchange with tap water.

The heat transfer medium passing through the hot-water supply heat exchanger 230 is introduced into the heat transfer medium reservoir tank 300.

Next, the heat transfer medium is circulated by repeating the above processes, and the closed circuit connected as described above forms a heat transfer medium channel.

As described above, when the heat transfer medium is circulated, heat energy is accumulated in the heat transfer medium reservoir tank 300, and when it is determined that a temperature of the heat transfer medium in the heat transfer medium reservoir tank 300 arrives at a preset temperature, the operation of the co-generator 100 is stopped.

Detection of the temperature of the heat transfer medium is performed by a temperature detection means (not shown) installed at the heat transfer medium reservoir tank 300.

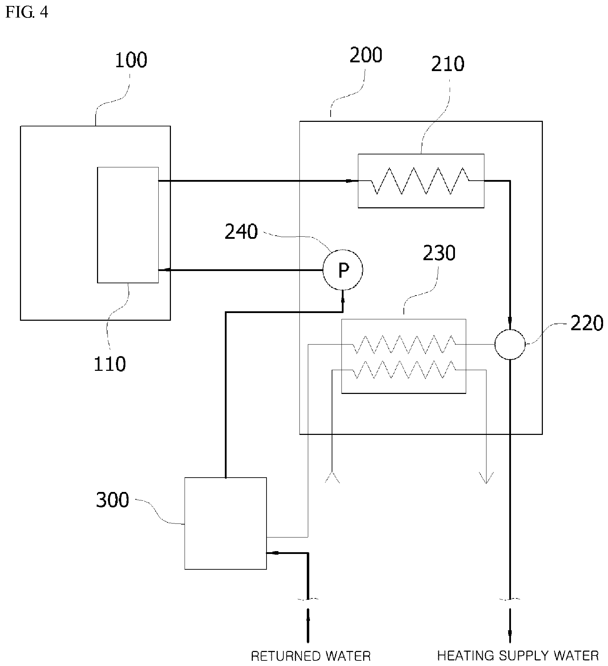

FIG. 4 is a view showing a path through which the heat transfer medium circulates in the cogeneration system of the present invention in a heating mode.

When the heating mode is performed, the boiler 200 is operated to perform combustion in the burner (not shown), and the three-way valve 220 is set to block a flow of the heat transfer medium toward the hot-water supply heat exchanger 230 and allow a flow of the heat transfer medium toward the place to be heated.

Here, the boiler 200 may be configured to be operated only when a temperature of the heat transfer medium in the heat transfer medium reservoir tank 300 is measured and it is determined as a result of the measurement that the heat transfer medium in the heat transfer medium reservoir tank 300 is insufficient for a heating requirement.

When the circulation pump 240 is driven, the heat transfer medium stored in the heat transfer medium reservoir tank 300 is introduced into the heat exchanger 110 of the co-generator 100 via the circulation pump 240.

In this case, the co-generator 100 may be shut down or may be operated to generate electricity to transmit heat energy to the heat transfer medium passing through the heat exchanger 110 using the waste heat generated therethrough.

The heat transfer medium passing through the heat exchanger 110 is heated by the combustion heat of the burner (not shown) via the main heat exchanger 210, and then supplied into the three-way valve 220.

Since the three-way valve 220 is opened toward the place to be heated, the heat transfer medium, which is heating supply water, passes through the place to be heated and is decreased in temperature, and then returns to be introduced into the heat transfer medium reservoir tank 300.

Next, in the heating mode, the above processes are repeated to circulate the heat transfer medium, and the closed circuit connected as described above configures a heating channel.

While the case in which the combustion is performed in the burner has been described, when the heating can be performed by only the heat energy accumulated in the heat transfer medium reservoir tank 300, only the co-generator 100 may be controlled to be operated with no combustion in the burner.

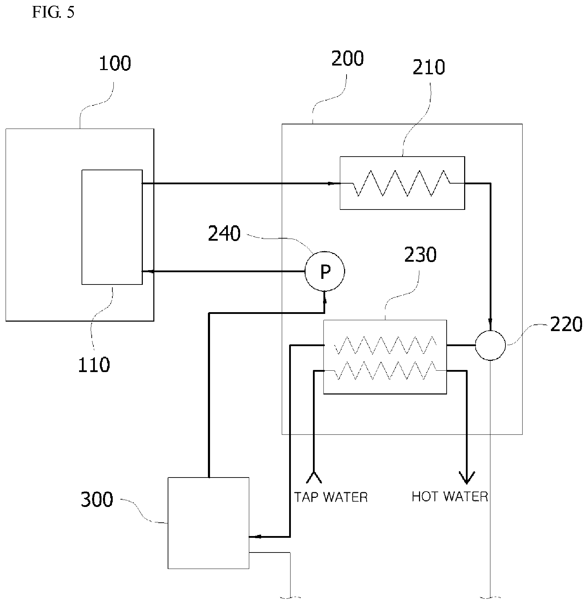

FIG. 5 is a view showing a path through which the heat transfer medium circulates in the cogeneration system of the present invention in the hot water mode.

When the hot water mode is performed, the boiler 200 is operated to perform combustion in the burner (not shown), and the three-way valve 220 is set to block a flow of the heat transfer medium toward the place to be heated and allow a flow of the heat transfer medium toward the hot-water supply heat exchanger 230.

Here, the boiler 200 may be configured to be operated only when a temperature of the heat transfer medium in the heat transfer medium reservoir tank 300 is measured and it is determined as a result of the measurement that the heat transfer medium in the heat transfer medium reservoir tank 300 is insufficient for a hot water requirement.

The flow of the heat transfer medium in the hot water mode is the same as the path of the heat transfer medium described with reference to FIG. 3.

In the hot water mode, the co-generator 100 may be shut down or may be operated to generate electricity to transfer heat energy to the heat transfer medium passing through the heat exchanger 110 by the waste heat generated therethrough.

The main heat exchanger 210 heats the heat transfer medium using combustion heat of the burner (not shown), and then, supplies the heat transfer medium to the three-way valve 220.

The hot-water supply heat exchanger 230 decreases the temperature of the heat transfer medium through heat exchange with tap water, and then introduces the heat transfer medium into the heat transfer medium reservoir tank 300.

Next, in the hot water mode, the processes are repeated to circulate the heat transfer medium, and the closed circuit connected as described above configures a hot water channel.

While the case in which the combustion is performed in the burner has been described, when the hot water can be supplied by only the heat energy accumulated in the heat transfer medium reservoir tank 300, only the co-generator 100 may be controlled to be operated with no combustion in the burner.

As described above, in the co-generator 100 integrally connected to the heat transfer medium channel of the boiler 200, a calorie control system of the boiler 200 can be used to precisely control the calories required to supply heating and hot water.

In addition, the heat energy accumulated in the heat transfer medium reservoir tank 300 is used for heating or hot water, and only the co-generator 100 is operated when there is no heating and hot water load, reducing a cost consumed by the operation of the cogeneration system.

## Claims

1. An operation method for a micro-cogeneration system, comprising:
operating a co-generator (100) including a heat exchanger (110) to recover waste heat generated when electricity is generated;
storing a heat transfer medium supplied from the co-generator (100) in a heat transfer medium reservoir tank (300) via a boiler (200) connected to the heat exchanger (110) and controlling the heat transfer medium stored in the heat transfer medium reservoir tank (300) to be circulated to the heat exchanger (110) of the co-generator (100) for absorbing said waste heat while passing through said heat exchanger (110), said heat transfer medium adapted to be supplied to a place to be heated and to a hot-water supply heat exchanger (230) to use said waste heat for both of heating and hot water;
operating only the co-generator (100) when there is no heating and hot water load; and
stopping the operation of the co-generator (100) when it is determined that a heat transfer medium temperature in the heat transfer medium reservoir tank (300) arrives at a preset temperature.

2. The operation method for a micro-cogeneration system according to claim 1, wherein, when there is no heating and hot water load, a circulation channel of the heat transfer medium forms a heat transfer medium channel by sequentially connecting the heat transfer medium reservoir tank (300), a circulation pump (240) installed in the boiler (200) to circulate the heat transfer medium in the heat transfer medium reservoir tank (300), the heat exchanger (110) of the co-generator (100) connected to the circulation pump (240), a main heat exchanger (210) connected to the heat exchanger (110) and installed in the boiler (200), a three-way valve (220) configured to selectively supply the heat transfer medium supplied from the main heat exchanger (210) to any one of a place to be heated and the hot-water supply heat exchanger (230), and the hot-water supply heat exchanger (230) connected to the three-way valve (220).

3. The operation method for a micro-cogeneration system according to claim 1, wherein, as the heat transfer medium supplied from the main heat exchanger (210) of the boiler (200) is selectively supplied to any one of the place to be heated and the hot-water supply heat exchanger (230), the heat transfer medium stored in the heat transfer medium reservoir tank (300) is used for heating and hot water.

4. The operation method for a micro-cogeneration system according to any one of claims 1 to 3, wherein the boiler is operated only when the heat transfer medium stored in the heat transfer medium reservoir tank (300) is insufficient for a heating or hot water requirement.

## Patentansprüche

1. Betriebsverfahren für ein Mikro-Heizkraftsystem, aufweisend:
Betreiben eines Ko-Generators (100) beinhaltend einen Wärmetauscher (110), um Abwärme wiederzugewinnen, die erzeugt wird, wenn Elektrizität produziert wird;
Speichern eines Wärmetransfermediums, das von dem Ko-Generator (100) in einem Wärmetransfermedium-Reservoirtank (300) über einen Boiler (200), der mit dem Wärmetauscher (110) in Verbindung steht, bereitgestellt wird, und Steuern des in dem Wärmetransfermedium-Reservoirtank (300) gespeicherten Wärmetransfermediums, so dass dieses zu dem Wärmetauscher (110) des Ko-Generators (100) zirkuliert wird, um die Abwärme zu absorbieren, während es den Wärmetauscher (110) durchquert, wobei das Wärmetransfermedium dazu dient, eine zu erwärmende Stelle und einen Warmwasserversorgungswärmetauscher (230) zu versorgen, um die Abwärme sowohl zum Erwärmen als auch für Warmwasser zu nutzen; Betreiben nur des Ko-Generators (100), wenn kein Erwärmen oder kein Warmwasserbedarf existiert; und
Anhalten des Betriebs des Ko-Generators (100), wenn festgestellt wird, dass eine Temperatur des Wärmetransfermediums in dem Wärmetransfermedium-Reservoirtank (300) bei einer vorbestimmten Temperatur angelangt ist.

2. Betriebsverfahren für ein Mikro-Heizkraftsystem nach Anspruch 1, bei dem, wenn kein Erwärmen oder kein Warmwasserbedarf existiert, ein Umwälzkanal der Wärme in dem Boiler (200) das Wärmetransfermedium in dem Wärmetransfermedium-Reservoirtank (300), in dem Wärmetauscher (110) des Ko-Generators (100), der mit der Umwälzpumpe (240) in Verbindung steht, in einem Hauptwärmetauscher (210), der mit dem Wärmetauscher in Verbindung steht und in dem Boiler (200) installiert ist, in einem Drei-Wege-Ventil (220), das ausgestaltet ist, um wahlweise irgendeine der zu erwärmenden Stellen und den Warmwasserversorgungswärmetauscher (230) mit dem von dem Hauptwärmetauscher (210) bereitgestellten Wärmetransfermedium zu versorgen, und in dem Warmwasserversorgungswärmetauscher (230), der mit dem Drei-Wege-Ventil (220) verbunden ist, zu zirkulieren.

3. Betriebsverfahren für ein Mikro-Heizkraftsystem nach Anspruch 1, bei dem, wenn das Wärmetransfermedium von dem Hauptwärmetauscher (210) des Boilers (200) wahlweise irgendeiner der zu erwärmenden Stellen und dem Warmwasserversorgungswärmetauscher (230) bereitgestellt wird, das in dem Wärmetransfermedium-Reservoirtank (300) gespeicherte Wärmetransfermedium zum Erwärmen und für Warmwasser genutzt wird.

4. Betriebsverfahren für ein Mikro-Heizkraftsystem nach einem der Ansprüche 1 bis 3, bei dem der Boiler nur betrieben wird, wenn das in dem Wärmetransfermedium-Reservoirtank (300) gespeicherte Wärmetransfermedium für ein Erwärmen oder für Warmwasser nicht ausreicht.

## Revendications

1. Procédé de fonctionnement pour un système de micro-cogénération, comprenant les étapes consistant à :
faire fonctionner un co-générateur (100) incluant un échangeur de chaleur (110) pour récupérer la chaleur résiduelle générée lors de la génération de puissance ;
stocker un médium de transfert de chaleur fourni par le co-générateur (100) dans une cuve de réservoir (300) de médium de transfert de chaleur via une chaudière (200) connectée à l'échangeur de chaleur (110) et contrôler le médium de transfert thermique stocké dans la cuve de réservoir (300) de médium de transfert de chaleur pour le faire circuler vers l'échangeur de chaleur (110) du co-générateur (100) pour absorber ladite chaleur résiduelle lorsqu'il passe dans ledit échangeur de chaleur (110), ledit médium de transfert de chaleur étant adapté pour être envoyé vers un endroit à chauffer et vers un échangeur thermique d'alimentation d'eau chaude (230) pour utiliser ladite chaleur résiduelle tant pour le chauffage que l'eau chaude ;
faire fonctionner le co-générateur uniquement (100) lorsqu'il n'y a pas de chauffage ni de charge d'eau chaude ; et
arrêter le fonctionnement du co-générateur (100) lorsqu'il est déterminé qu'une température du médium de transfert de chaleur dans la cuve de réservoir (300) de médium de transfert de chaleur arrive à une température prédéfinie.

2. Procédé de fonctionnement pour un système de micro-cogénération selon la revendication 1, dans lequel, lorsqu'il n'y a pas de chauffage ni de charge d'eau chaude, un canal de circulation du médium de transfert de chaleur forme un canal de médium de transfert de chaleur en connectant séquentiellement la cuve de réservoir (300) de médium de transfert de chaleur, une pompe de circulation (240) installée dans la chaudière (200) pour faire circuler le médium de transfert de chaleur dans la cuve de réservoir (300) de médium de transfert de chaleur, l'échangeur de chaleur (110) du co-générateur (100) connecté à la pompe de circulation (240), un échangeur de chaleur principal (210) connecté à l'échangeur de chaleur (110) et installé dans la chaudière (200), une vanne trois voies (220) configurée pour alimenter de façon sélective le médium de transfert de chaleur amené depuis l'échangeur de chaleur principal (210) vers l'un quelconque des endroits à chauffer et l'échangeur thermique d'alimentation en eau chaude (230), et l'échangeur thermique d'alimentation en eau chaude (230) connecté à la vanne trois voies (220).

3. Procédé de fonctionnement pour un système de micro-cogénération selon la revendication 1 dans lequel, lorsque le médium de transfert de chaleur alimenté depuis l'échangeur de chaleur principal (210) de la chaudière (200) est envoyé sélectivement vers l'un quelconque des endroits à chauffer et l'échangeur thermique d'alimentation en eau chaude (230), le médium de transfert de chaleur stocké dans la cuve de réservoir (300) de médium de transfert de chaleur est utilisé pour le chauffage et l'eau chaude.

4. Procédé de fonctionnement pour un système de micro-cogénération selon l'une quelconque des revendications 1 à 3, dans lequel la chaudière est utilisée uniquement lorsque le médium de transfert thermique stocké dans la cuve de réservoir (300) de médium de transfert de chaleur est insuffisant pour un besoin de chauffage ou d'eau chaude.
